# EUROPÄISCHE PATENTSCHRIFT

(11) **EP 1 809 781 B1**
(45) Veröffentlichungstag und Bekanntmachung des Hinweises auf die Patenterteilung: **24.03.2010**
(21) Anmeldenummer: 05810681.6
(22) Anmeldetag: 04.11.2005
(51) Int. Cl.: C22F 1/00, F16C 19/26, F16C 19/40, F16C 33/34, F16C 43/04

(54) **RADIALROLLENLAGER, INSBESONDERE ZYLINDER- ODER NADELROLLENLAGER, MIT HOHLROLLEN AUS EINER FORMGEDÄCHTNISLEGIERUNG ALS ABSTANDSKÖRPER**
RADIAL ROLLER BEARING, IN PARTICULAR A CYLINDRICAL OR NEEDLE ROLLER BEARING COMPRISING HOLLOW ROLLERS CONSISTING OF A SHAPE MEMORY ALLOY AND ACTING AS SPACERS
ROULEMENT A ROULEAUX A CHARGE RADIALE, NOTAMMENT A ROULEAUX CYLINDRIQUES OU A AIGUILLES, DOTE DE ROULEAUX CREUX EN ALLIAGE A MEMOIRE DE FORME EN TANT QU'ELEMENTS D'ESPACEMENT

(30) Priorität: 09.11.2004 DE 102004053936
(43) Veröffentlichungstag der Anmeldung: 25.07.2007
(73) Patentinhaber: Schaeffler KG, 97421 Schweinfurt (DE)
(72) Erfinder: GLÜCK, Stefan, 97464 Niederwerrn (DE)
(86) Internationale Anmeldenummer: PCT/DE2005/001976
(87) Internationale Veröffentlichungsnummer: WO 2006/050697

(56) Entgegenhaltungen:
- DE-A1- 10 120 489
- DE-A1- 10 214 468
- GB-A- 407 375
- US-A- 1 494 638
- US-A- 3 123 413
- US-A- 4 858 293
- US-A- 5 033 877
- US-A- 5 630 671
- US-A1- 2004 101 225

## Beschreibung

### Gebiet der Erfindung

Die Erfindung betrifft ein Radialrollenlager, insbesondere ein Zylinder- oder Nadelrollenlager, welches einen äußeren Lagerring und einen inneren Lagerring sowie eine Anzahl zwischen den Lagerringen angeordnete Rollenwälzkörper aufweist, die auf seitlich mit je zwei durchgehenden Borden begrenzten Laufbahnen des äußeren Lagerrings und des inneren Lagerrings abrollen und durch einzelne, jeweils zwischen zwei Rollenwälzkörpern angeordnete Rollen in gleichmäßigen Abständen zueinander geführt werden.

### Hintergrund der Erfindung

Ein gattungsähnliches Radialrollenlager ist beispielsweise aus der deutschen Patentschrift Nr. 452 475 vorbekannt. Ein solches Radialrollenlager, das sowohl an seinem äußeren als auch an seinem inneren Lagerring eine seitliche Begrenzung der Laufbahnen durch Borde aufweist, zeichnet sich durch eine hohe Tragfähigkeit aus und kann neben hohen Radialkräften auch hohe Axialkräfte in beiden Richtungen aufnehmen. Da diese Borde jedoch als einstückig mit den Lagerringen verbundene, umlaufend durchgehende Borde ausgebildet sind, ist es konstruktionsbedingt nicht möglich, das Radialrollenlager vollständig ohne Zwischenräume mit den entsprechenden Zylinderrollen zu befüllen. Das Befüllen dieses Radialrollenlagers mit Zylinderrollen aus einem Wälzlagerstahl muss deshalb derart erfolgen, dass die beiden Lagerringe als erstes exzentrisch zueinander angeordnet werden und anschließend der entstehende freie sichelförmige Raum zwischen den Lagerringen mit den Zylinderrollen gefüllt wird. Danach wird der innere Lagerring zwischen der ersten und der letzten Zylinderrolle unter Ausnutzung der Elastizität beider Lagerringe in die zum äußeren Lagerring konzentrische Stellung gebracht und die Zylinderrollen auf dem Umfang ihrer Laufbahnen gleichmäßig verteilt. Damit die Zylinderrollen auch unter Belastung immer einen gleichmäßigen Abstand zueinander aufweisen, werden dann abschließend zwei Teilringe, in die jeweils einseitig der Form der Zylinderrollen entsprechende Halbtaschen eingearbeitet sind, von beiden Seiten des Radialrollenlagers durch den Freiraum zwischen den Borden des äußeren Lagerrings und den Borden des inneren Lagerrings hindurch in das Radialrollenlager eingesetzt und durch Vernieten zu einem Käfig miteinander verbunden.

Nachteilig bei einem solchen Radialrollenlager ist es jedoch, dass dessen Käfig einen relativ hohen Fertigungs- und Montageaufwand erfordert und somit die Herstellungskosten des Lagers erhöht. Ebenso hat es sich als nachteilig erwiesen, dass die auf ihren Laufbahnen abrollenden Zylinderrollen in ihren Käfigtaschen gegen den relativ zu den Zylinderrollen feststehend angeordneten Käfig anlaufen und es somit zu einem erhöhten Reibverschleiß sowohl an den Zylinderrollen als auch am Käfig kommen kann, der ein unerwünschtes Vor- oder Nacheilen der Zylinderrollen aus ihrer Sollposition bis hin zum Verklemmen des Radialrollenlagers zur Folge haben kann. Da derartige Radialrollenlager zudem radial hoch belastet sind und somit außerhalb der Lastzone des Lagers ein relativ hohes Radialspiel aufweisen, führt ein erhöhtes Taschenspiel im Zusammenhang mit diesem Radialspiel dazu, dass die Zylinderrollen jeweils schlagartig in die Lastzone des Lagers hineingezogen werden und diese Schläge dann über den Käfig auf die anderen Zylinderrollen des Lagers übertragen. Dadurch kommt es zu einem unrunden Lauf des Radialrollenlagers, durch den der Verschleiß an den Zylinderrollen und am Käfig weiter verstärkt und letztlich die Lebensdauer des Radialrollenlagers stark reduziert wird.

Eine andere Möglichkeit, die Zylinderrollen eines Radialrollenlagers, das sowohl an seinem äußeren als auch an seinem inneren Lagerring eine seitliche Begrenzung der Laufbahnen durch Borde aufweist, zu führen, wurde auch durch die US-Patentschrift Nr. 837 830 bereits bekannt. Bei diesem Radialrollenlager wird die Führung der Zylinderrollen durch einzelne, im Querschnitt dreieckförmig und hohl ausgebildete Zwischenstücke gebildet, deren Länge und Breite etwa der Länge und dem Durchmesser der Zylinderrollen entsprechen und die durch die längsaxial getrennte Ausbildung eines ihrer Schenkel in ihrer Breite elastisch verformbar sind. Diese Zwischenstücke werden nach dem Befüllen des Lagers mit den Zylinderrollen und deren gleichmäßiger Ausrichtung in zusammengedrückter Form durch den Freiraum zwischen einem Bord des äußeren Lagerrings und einem Bord des inneren Lagerrings hindurch zwischen jeweils zwei Zylinderrollen in das Radialrollenlager eingesetzt und nehmen dann innerhalb des Lagers durch elastische Entspannung wieder ihrer ursprüngliche Dreiecksform an, in der sie mit ihrem getrennten Schenkel auf der Laufbahn des inneren Lagerrings aufliegen und mit ihren geschlossenen Schenkeln jeweils zwei Zylinderrollen des Radialrollenlagers gegeneinander verspannen.

Ein derart ausgebildetes Radialrollenlager hat jedoch den Nachteil, dass die zwischen den Zylinderrollen angeordneten dreieckförmigen Zwischenstücke durch ihren getrennt ausgebildeten Schenkel und durch ihre Dreiecksform nicht geeignet sind, hohen Umfangsbelastungen stand zu halten, sondern in solchen Belastungsfällen eher dazu neigen, durch elastische Verformung in ihre Montageform zusammengedrückt zu werden oder zu verkippen. Dadurch kann es auch bei diesem Lager zu einem unerwünschten Schlupf der Zylinderrollen bzw. zum Vor- oder Nacheilen der Zylinderrollen aus ihrer Sollposition kommen, das zu einem Verklemmen des Radialrollenlagers bis hin zu dessen Ausfall führt. Darüber hinaus hat es sich auch bei diesen Radialrollenlager als nachteilig erwiesen, dass die auf ihren Laufbahnen abrollenden Zylinderrollen gegen die relativ zu den Zylinderrollen feststehend angeordneten Zwischenstücke anlaufen und es somit zu einem erhöhten Reibverschleiß sowohl an den Zylinderrollen als auch an den Zwischenstücken kommen kann. Dabei wird der Verschleiß der Zwischenstücke noch dadurch erhöht, dass diese durch die Zylinderrollen über die Laufbahn des inneren Lagerrings permanent mitgeschliffen werden, so dass auch dieses Radialrollenlager nur eine geringe Lebensdauer aufweist.

Die gattungsbildende Patentschrift US 1 494 638 A beschreibt ein Radialrollenlager bestehend aus einem äußeren Lagerring, einem inneren Lagerring und zwischen den Lagerringen angeordneten, lasttragenden Zylinderrollen, die auf seitlich mit je zwei durchgehenden Borden begrenzten Laufbahnen des äußeren Lagerrings und des inneren Lagerrings abrollen und die durch einzelne, jeweils zwischen zwei Zylinderrollen angeordneten Trennrollen in gleichmäßigen Abständen zueinander geführt werden. Beim Zusammenbau des Radialrollenlagers werden die Trennrollen durch den Freiraum zwischen zwei Borden der Lagerringe hindurch in das Radialrollenlager eingesetzt. Um ein gewisses Spiel während des Zusammenbaus zu erreichen, sind einige der Trennrollen als Hohlrollen ausgebildet, die radial nach außen in die Laufbahn des Außenrings ausweichen können und in die nach der Montage massive Kerne eingebracht werden.

Aus dem Dokument US 5 033 877 A ist ein Zylinderrollenlager bekannt, bei dem sämtliche Zylinderrollen als Hohlrollen ausgebildet sind.

Dokument DE 101 20 489 A beschreibt ein Zylinderrollenlager mit einem Scheibenkäfig, der zur Vereinfachung des Zusammenbaus aus einer Formgedächtnislegierung gebildet ist.

### Aufgabe der Erfindung

Ausgehend von den dargelegten Nachteilen der Lösungen des bekannten Standes der Technik liegt der Erfindung deshalb die Aufgabe zu Grunde, ein Radialrollenlager, insbesondere ein sowohl am äußeren als auch am inneren Lagerring mit durchgehenden Laufbahnborden ausgebildetes Zylinder- oder Nadelrollenlager, zu konzipieren, welches mit einfach montierbaren Trennkörpern für die Rollenwälzkörper ausgebildet ist, die sowohl hohen Umfangsbelastungen stand halten als auch den Reibverschleiß zwischen den Rollenwälzkörpern und den Trennkörpern auf ein Minimum reduzieren sowie jederzeit eine sichere Führung der Rollenwälzkörper gewährleisten und gleichzeitig beim Eintritt der Rollenwälzkörper in die Lastzone eine schlagdämpfende Wirkung aufweisen.

### Beschreibung der Erfindung

Erfindungsgemäß wird diese Aufgabe bei einem Radialrollenlager nach dem Oberbegriff des Anspruchs 1 derart gelöst, dass die Rollen durch Hohlrollen aus einer Formgedächtnislegierung gebildet werden, die bei der Montage des Radialrollenlagers im Querschnitt auf das Maß des Freiraums zwischen einem Bord des äußeren Lagerrings und einem Bord des inneren Lagerrings deformierbar und durch den Freiraum zwischen diesen Borden der Lagerringe hindurch in das Radialrollenlager einsetzbar sind sowie nach dem Einsetzen in das Radialrollenlager beim Erreichen einer vorbestimmten Temperatur selbsttätig ihre Ursprungsform annehmen.

So genannte Formgedächtnislegierungen oder auch Memory-Legierungen sind seit langem Gegenstand der anwendungsorientierten Materialforschung und zeichnen sich dadurch aus, dass sie nach geeigneter Behandlung auf Grund einer Umwandlung vom Austenit zum Martensit ihre Gestalt in Abhängigkeit von der Temperatur oder auch von Druck verändern. In ihrer Tieftemperaturform können Werkstücke aus solchen Legierungen bleibend, das heißt scheinbar plastisch, verformt werden, während sie bei Erwärmung über die Umwandlungstemperatur ihre ursprüngliche Form wieder annehmen. Werden diese Werkstücke erneut abgekühlt, können sie erneut plastisch verformt werden, nehmen aber, sofern sie entsprechend erwärmt werden, unter Rückkehr ihrer Mikrostruktur zum Austenit wieder ihre makroskopische, ursprüngliche Hochtemperaturform an. Beim Formgedächtnisverhalten kann man grundsätzlich zwischen dem Einwegeffekt und dem Zweiwegeeffekt unterscheiden. Beim Einwegeffekt nimmt ein Material, das bei einer tiefen Temperatur verformt wurde, seine ursprüngliche Form wieder an, wenn es auf eine höhere Temperatur erhitzt wurde. Das Material erinnert sich gewissermaßen beim Aufheizen an seine ursprüngliche Form und behält diese auch bei einer nachfolgenden Abkühlung bei. Als Zweiwegeeffekt bezeichnet man dagegen die Erscheinung, bei der sich das Material sowohl bei Temperaturerhöhung als auch bei Abkühlung an seine eintrainierte Form erinnert, das heißt eine Form bei einer hohen Temperatur und eine andere Form bei einer tiefen Temperatur.

Ausgehend davon wird es in zweckmäßiger Weiterbildung des erfindungsgemäß ausgebildeten Radialrollenlagers deshalb vorgeschlagen, dass die Hohlrollen aus einer Formgedächtnislegierung in ihrer Ursprungsform den gleichen Außendurchmesser und die gleiche Länge wie die Rollenwälzkörper des Radialrollenlagers aufweisen und im Querschnitt bevorzugt mit einer dünnwandigen Materialstärke ausgebildet sind. Der Vorteil derart ausgebildeter, jeweils zwischen den Rollenwälzkörpern angeordneter Hohlrollen liegt dabei darin, dass diese ebenso wie die Rollenwälzkörper auf den Laufbahnen des inneren und des äußeren Lagerrings abrollen und dabei wie die Rollenwälzkörper durch die Borde an diesen Laufbahnen geführt werden. Dadurch sowie durch die genaue abstandsfüllende Einpassung der Hohlrollen zwischen den Rollenwälzkörpern werden die Rollenwälzkörper in exakter Ausrichtung von den Hohlrollen angetrieben, so dass weder die Rollenwälzkörper noch die Hohlrollen verkippen oder verkanten können. Da Formgedächtnislegierungen in ihrer Hochtemperaturform bzw. in ihrer harten Phase äußerst stabil sind ist dabei trotz und wegen der dünnwandigen Ausführung der Hohlrollen gleichzeitig gewährleistet, dass die Hohlrollen einerseits auch hohen Umfangsbelastungen Stand halten können und andererseits die nötige Elastizität aufweisen, um sowohl die beim Eintreten der Rollenwälzkörper in die Lastzone des Lagers auftretenden Schläge als auch sonstige Schwingungen der Rollenwälzkörper entsprechen abzudämpfen.

Als vorteilhafte Ausgestaltung des erfindungsgemäß ausgebildeten Radialrollenlagers wird es darüber hinaus noch vorgeschlagen, dass die aus einer Formgedächtnislegierung bestehenden Hohlrollen bevorzugt aus einer Nickel-Titan-Legierung mit Ein- oder Zweiwegcharakteristik ausgebildet sind, die in ihrer martensitische Niedrigtemperaturphase leicht verformbar ist und beim Übergang in deren austenitische Hochtemperaturphase ihre ursprüngliche Fertigungsform annimmt. Bei Verwendung einer Nickel-Titan-Legierung mit Einwegcharakteristik verbleiben die Hohlrollen somit nach ihrem Übergang in deren austenitische Hochtemperaturphase in ihrer ursprünglichen Fertigungsform, so dass das Radialrollenlager nicht mehr demontierbar ist. Die Verwendung einer Nickel-Titan-Legierung mit Zweiwegcharakteristik hat dagegen den Vorteil, dass diese sich sowohl an ihre Form in der Niedrigtemperaturphase als auch an ihre Form in der Hochtemperaturphase "erinnert", so dass die Hohlrollen bei einer Abkühlung des Radialrollenlagers auf die Niedrigtemperatur der Formgedächtnislegierung zum Zwecke der Demontage des Radialrollenlagers ihre deformierte Form wieder annehmen und somit problemlos aus dem Lager entfernbar sind.

Eine besonders vorteilhafte Ausführungsform eines erfindungsgemäß ausgebildeten Rollenlagers ist es dabei, wenn sowohl die martensitische Niedrigtemperaturphase als auch die austenitische Hochtemperaturphase der Formgedächtnislegierung für die Hohlrollen außerhalb der typischen Betriebstemperaturen des Rollenlagers festgelegt ist. Bei einem erfindungsgemäß ausgebildeten Zylinderrollenlager, das beispielsweise als Festlager für eine Werkzeugmaschinenspindel oder dergleichen eingesetzt wird, wird die Niedrigtemperaturphase der Formgedächtnislegierung beispielsweise etwa bei Stickstoff-Siedetemperatur (-77°C) und die Hochtemperaturphase etwa am Gefrierpunkt von Wasser (0°C) festgelegt, so dass es im Betrieb des Zylinderrollenlagers ausgeschlossen ist, dass sich die Hohlrollen durch äußere Temperatureinflüsse und einen damit verbundenen selbsttätigen Übergang von der austenitischen Hochtemperaturphase der Formgedächtnislegierung in deren martensitische Niedrigtemperaturphase oder umgekehrt in unerwünschter Weise verformen. Die jeweiligen Übergangstemperaturen der Formgedächtnislegierung sind jedoch individuell einstellbar und können somit den jeweils zu erwartenden Betriebsbedingungen des Rollenlagers entsprechend angepasst werden.

Das erfindungsgemäß ausgebildete Radialrollenlager mit sowohl am äußeren als auch am inneren Lagerring durchgehenden Laufbahnborden weist somit gegenüber den aus dem Stand der Technik bekannten gleichartigen Radialrollenlagern den Vorteil auf, dass es durch die Bildung der Trennkörpern als Hohlrollen aus einer Formgedächtnislegierung einfach montierbaren Trennkörpern aufweist, die sowohl hohen Umfangsbelastungen stand halten als auch durch das Mitrollen der Hohlrollen auf den Laufbahnen der Lagerringe den Reibverschleiß zwischen den Rollenwälzkörpern und der Trennkörpern auf ein Minimum reduziert. Gleichzeitig gewährleisten die Hohlrollen jederzeit eine sichere Führung der Rollenwälzkörper im Lager und weisen eine schlag- und schwingungsdämpfende Wirkung auf, durch die auftretende Schläge beim Eintritt der Rollenwälzkörper in die Lastzone des Lagers oder sonstige Schwingungen der Rollenwälzkörper minimiert werden.

### Kurze Beschreibung der Zeichnungen

Eine bevorzugte Ausführungsform des erfindungsgemäß ausgebildeten Radialrollenlagers wird nachfolgend unter Bezugnahme auf die beigefügten Zeichnungen näher erläutert. Dabei zeigen:
- Figur 1: eine Seitenansicht eines erfindungsgemäß ausgebildeten Radialrollenlagers mit einem Teilbruch;
- Figur 2: die vergrößerte Darstellung eines Teilquerschnitts durch ein erfindungsgemäß ausgebildetes Radialrollenlagers.

### Ausführliche Beschreibung der Zeichnungen

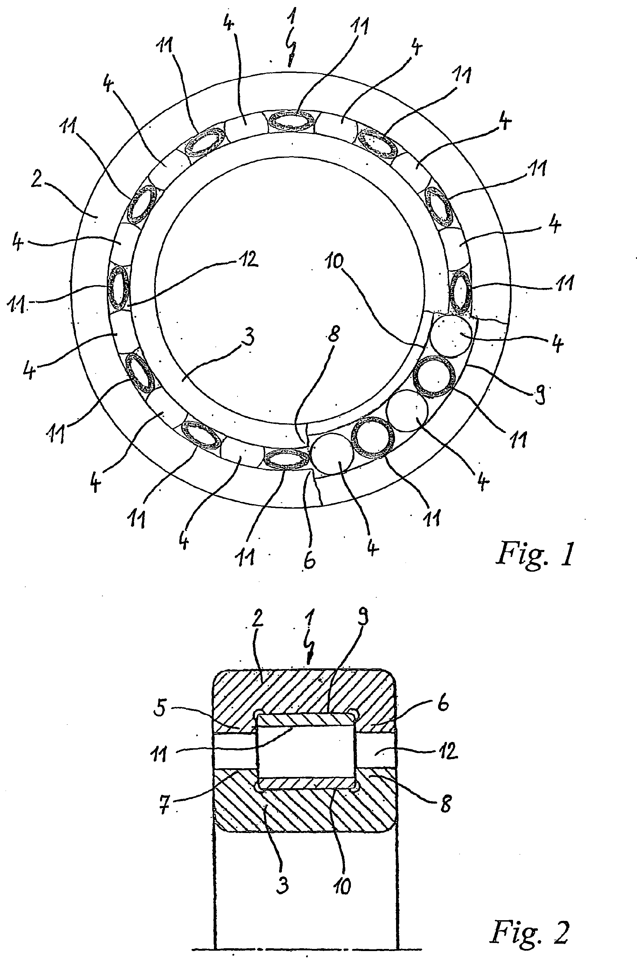

Aus den Figuren 1 und 2 geht deutlich ein als Zylinderrollenlager ausgebildetes Radialrollenlager 1 hervor, welches im Wesentlichen aus einem äußeren Lagerring 2 und aus einem inneren Lagerring 3 sowie aus einer Anzahl zwischen den Lagerringen 2, 3 angeordneten Rollenwälzkörpern 4 besteht, die auf seitlich mit je zwei durchgehenden Borden 5, 6 und 7, 8 begrenzten Laufbahnen 9, 10 des äußeren Lagerrings 2 und des inneren Lagerrings 3 abrollen und durch einzelne, jeweils zwischen zwei Rollenwälzkörpern 4 angeordnete Hohlrollen 11 in gleichmäßigen Abständen zueinander geführt werden.

Ebenso ist aus den Figuren 1 und 2 ersichtlich, dass die Hohlrollen 11 aus einer Formgedächtnislegierung gebildet werden und bei der Montage des Radialrollenlagers 1, wie in Figur 1 angedeutet, im Querschnitt auf das Maß des Freiraums 12 zwischen einem Bord 6 des äußeren Lagerrings 2 und einem Bord 8 des inneren Lagerrings 3 ellipsenförmig deformierbar und durch den Freiraum 12 zwischen diesen Borden 6, 8 der Lagerringe 2, 3 hindurch in das Radialrollenlager 1 einsetzbar sind. Die ausgebrochene Teilansicht in Figur 1 macht dabei deutlich, dass diese Hohlrollen 11 nach dem Einsetzen in das Radialrollenlager 1 beim Erreichen einer vorbestimmten Temperatur selbsttätig ihre Ursprungsform annehmen, in der die Hohlrollen 11 den gleichen Außendurchmesser und die gleiche Länge wie die Rollenwälzkörper 4 des Radialrollenlagers 1 aufweisen. Im Querschnitt sind die Hohlrollen 11 dabei mit einer dünnwandigen Materialstärke ausgebildet, so dass die Hohlrollen 11 einerseits auch hohen Umfangsbelastungen Stand halten können und andererseits die nötige Elastizität aufweisen, um sowohl die beim Eintreten der Rollenwälzkörper 4 in die Lastzone des Radialrollenlagers 1 auftretenden Schläge als auch sonstige Schwingungen der Rollenwälzkörper 4 entsprechen abzudämpfen.

Lediglich andeutungsweise bringen die Figuren 1 und 2 noch zum Ausdruck, dass die aus einer Formgedächtnislegierung bestehenden Hohlrollen 11 aus einer Nickel-Titan-Legierung mit Zweiwegcharakteristik ausgebildet sind, die in ihrer martensitische Niedrigtemperaturphase leicht verformbar ist und beim Übergang in deren austenitische Hochtemperaturphase ihre ursprüngliche Fertigungsform annimmt. Sowohl die martensitische Niedrigtemperaturphase als auch die austenitische Hochtemperaturphase dieser Formgedächtnislegierung sind dabei derart außerhalb der typischen Betriebstemperaturen des Radialrollenlagers 1 festgelegt, dass die Niedrigtemperaturphase der Formgedächtnislegierung bei einer etwa der Stickstoff-Siedetemperatur entsprechenden Temperatur von -77°C liegt, während die Hochtemperaturphase der Formgedächtnislegierung bei einer etwa dem Gefrierpunkt von Wasser entsprechenden Temperatur von 0°C angeordnet ist. Beim Einsatz eines derart ausgebildeten Zylinderrollenlagers im Antrieb einer Werkzeugmaschine ist es somit ausgeschlossen, dass sich die Hohlrollen 11 durch äußere Temperatureinflüsse und einen damit verbundenen selbsttätigen Übergang von der austenitischen Hochtemperaturphase der Formgedächtnislegierung in deren martensitische Niedrigtemperaturphase oder umgekehrt in unerwünschter Weise verformen. Gleichzeitig ist ein solches Zylinderrollenlager durch Abkühlung auf Stickstoff-Siedetemperatur und die damit verbundene elliptische Rückverformung der Hohlrollen 11 wieder demontierbar.

### Bezugszahlenliste

- 1: Radialrollenlager
- 2: äußerer Lagerring
- 3: innerer Lagerring
- 4: Rollenwälzkörper
- 5: Bord von 9
- 6: Bord von 9
- 7: Bord von 10
- 8: Bord von 10
- 9: Laufbahn von 2
- 10: Laufbahn von 3
- 11: Hohlrollen
- 12: Freiraum

## Patentansprüche

1. Radialrollenlager, insbesondere Zylinder- oder Nadelrollenlager, welches einen äußeren Lagerring (2) und einen inneren Lagerring (3) sowie eine Anzahl zwischen den Lagerringen (2, 3) angeordnete Rollenwälzkörper (4) aufweist, die auf seitlich mit je zwei durchgehenden Borden (5, 6 und 7, 8) begrenzten Laufbahnen (9, 10) des äußeren Lagerrings (2) und des inneren Lagerrings (3) abrollen und durch einzelne, jeweils zwischen zwei Rollenwälzkörpern (4) angeordnete Rollen in gleichmäßigen Abständen zueinander geführt werden, **dadurch gekennzeichnet, dass** die Rollen durch Hohlrollen (11) aus einer Formgedächtnislegierung gebildet werden, die bei der Montage des Radialrollenlagers (1) im Querschnitt auf das Maß des Freiraums (12) zwischen einem Bord (6) des äußeren Lagerrings (2) und einem Bord (8) des inneren Lagerrings (3) deformierbar und durch den Freiraum (12) zwischen diesen Borden (6, 8) der Lagerringe (2, 3) hindurch in das Radialrollenlager (1) einsetzbar sind sowie nach dem Einsetzen in das Radialrollenlager (1) beim Erreichen einer vorbestimmten Temperatur selbsttätig ihre Ursprungsform annehmen.

2. Radialrollenlager nach Anspruch 1, **dadurch gekennzeichnet, dass** die Hohlrollen (11) aus einer Formgedächtnislegierung in ihrer Ursprungsform den gleichen Außendurchmesser und die gleiche Länge wie die Rollenwälzkörper (4) des Radialrollenlagers (1) aufweisen und im Querschnitt bevorzugt mit einer dünnwandigen Materialstärke ausgebildet sind.

3. Radialrollenlager nach Anspruch 2, **dadurch gekennzeichnet, dass** die aus einer Formgedächtnislegierung bestehenden Hohlrollen (11) bevorzugt aus einer Nickel-Titan-Legierung mit Ein- oder Zweiwegcharakteristik ausgebildet sind, die in ihrer martensitische Niedrigtemperaturphase leicht verformbar ist und beim Übergang in deren austenitische Hochtemperaturphase ihre ursprüngliche Fertigungsform annimmt.

4. Radialrollenlager nach Anspruch 3, **dadurch gekennzeichnet, dass** sowohl die martensitische Niedrigtemperaturphase als auch die austenitische Hochtemperaturphase der Formgedächtnislegierung außerhalb der typischen Betriebstemperaturen des Radialrollenlagers (1) festgelegt ist, beispielsweise die Niedrigtemperaturphase etwa bei Stickstoff-Siedetemperatur (-77°C) und die Hochtemperaturphase etwa am Gefrierpunkt von Wasser (0°C).

## Claims

1. Radial roller bearing, in particular a cylindrical or needle roller bearing, which has an outer bearing ring (2) and an inner bearing ring (3) and also a number of roller rolling bodies (4) which are arranged between the bearing rings (2, 3) and which roll on raceways (9, 10), delimited laterally in each case by two continuous rims (5, 6 and 7, 8), of the outer bearing ring (2) and of the inner bearing ring (3) and are guided at uniform distances from one another by means of individual rollers arranged in each case between two roller rolling bodies (4), **characterized in that** the rollers are formed by hollow rollers (11) consisting of a shape memory alloy, which, when the radial roller bearing (1) is assembled, can be deformed in cross section to the dimension of the free space (12) between a rim (6) of the outer bearing ring (2) and a rim (8) of the inner bearing ring (3) and can be inserted into the radial roller bearing (1) through the free space (12) between these rims (6, 8) of the bearing rings (2, 3) and, after insertion into the radial roller bearing (1), automatically assume their original shape when a predetermined temperature is reached.

2. Radial roller bearing according to Claim 1,
**characterized in that** the hollow rollers (11) consisting of a shape memory alloy have in their original shape the same outside diameter and the same length as the roller rolling bodies (4) of the radial roller bearing (1) and are preferably designed in cross section with a thin-walled material thickness.

3. Radial roller bearing according to Claim 2, **characterized in that** the hollow rollers (11) consisting of a shape memory alloy are designed preferably of a nickel/titanium alloy with a one-way or two-way characteristic which is easily deformable in its martensitic low-temperature phase and assumes its original manufacturing shape during the transition into its austenitic high-temperature phase.

4. Radial roller bearing according to Claim 3, **characterized in that** both the martensitic low-temperature phase and the austenitic high-temperature phase of the shape memory alloy are fixed outside the typical operating temperatures of the radial roller bearing (1), for example the low-temperature phase approximately at the nitrogen boiling temperature (-77°C) and the high-temperature phase approximately at the freezing point of water (0°C).

## Revendications

1. Roulement à rouleaux à charge radiale, notamment roulement à rouleaux cylindriques ou à aiguilles, comportant une bague de roulement extérieure (2) et une bague de roulement intérieure (3) ainsi qu'un certain nombre d'éléments de roulement a rouleaux (4) disposés entre les bagues de roulement (2, 3), qui roulent sur des voies de roulement (9, 10) de la bague de roulement extérieure (2) et de la bague de roulement intérieure (3) limitées chacune latéralement par deux bords (5, 6 et 7, 8) continus et qui sont guidés les uns par rapport aux autres à intervalles réguliers par des rouleaux individuels, disposés à chaque fois entre deux éléments de roulement à rouleaux (4), **caractérisé en ce que** les rouleaux sont formés par des rouleaux creux (11) en alliage à mémoire de forme, qui, lors du montage du roulement à rouleaux à charge radiale (1), peuvent être déformés en section transversale à la mesure de l'espace libre (12) entre un bord (6) de la bague de roulement extérieure (2) et un bord (8) de la bague de roulement intérieure (3) et peuvent être insérés dans le roulement à rouleaux à charge radiale (1) à travers l'espace libre (12) entre lesdits bords (6, 8) des bagues de roulement (2, 3) et reprennent automatiquement leur forme initiale après avoir été insérés dans le roulement à rouleaux à charge radiale (1) lorsqu'une température déterminée est atteinte.

2. Roulement à rouleaux à charge radiale selon la revendication 1, **caractérisé en ce que** les rouleaux creux (11) en alliage à mémoire de forme présentent, dans leur forme initiale, le même diamètre extérieur et la même longueur que les éléments de roulement à rouleaux (4) du roulement à rouleaux à charge radiale (1) et sont de préférence réalisés en section transversale avec une épaisseur de matériau à paroi mince.

3. Roulement à rouleaux à charge radiale selon la revendication 2, **caractérisé en ce que** les rouleaux creux (11) constitués d'un alliage à mémoire de forme, sont de préférence réalisés en un alliage de nickel-titane avec une caractéristique unidirectionnelle ou bidirectionnelle, qui peut être facilement déformé dans sa phase martensitique à basse température et qui reprend sa forme de fabrication initiale lors de la transition à la phase austénitique à haute température.

4. Roulement à rouleaux à charge radiale selon la revendication 3, **caractérisé en ce que** la phase martensitique à basse température ainsi que la phase austénitique à haute température de l'alliage à mémoire de forme est définie en dehors des températures de fonctionnement typiques du roulement à rouleaux à charge radial (1), par exemple la phase à basse température est définie environ à la température d'ébullition de l'azote (-77°C) et la phase à haute température est définie approximativement au point de congélation de l'eau (0°C).
